# EUROPEAN PATENT SPECIFICATION

(11) **EP 4 213 289 B1**
(45) Date of publication and mention of the grant of the patent: **26.03.2025**
(21) Application number: 23152078.4
(22) Date of filing: 17.01.2023
(51) Int. Cl.: H01M 50/383, H01M 50/375, H01M 50/30, H01M 50/35

(54) **SUPPRESSION OF SAFETY GASES**
UNTERDRÜCKUNG VON SICHERHEITSGASEN
SUPPRESSION DE GAZ DE SÉCURITÉ

(30) Priority: 18.01.2022 US 202263300415 P
(43) Date of publication of application: 19.07.2023
(73) Proprietor: Kidde-Fenwal, LLC, Ashland, MA 01721 (US)
(72) Inventor: PENDEN, Karl Fredrik, Ashland, MA 01721 (US); KLIEM, John, Ashland, MA 01721 (US)
(74) Representative: Müller-Boré & Partner Patentanwälte PartG mbB

(56) References cited:
- KR-A- 20210 017 535
- KR-A- 20210 097 523
- US-A1- 2012 003 511
- US-A1- 2013 059 175
- US-A1- 2019 351 268

## Description

The disclosure pertains to the art of lithium ion batteries, and more particularly, to a battery energy storage system. The invention relates to a battery energy storage system comprising a battery mounting area and a venting area, and a method of managing a battery energy storage system.

Existing lithium ion battery cells are equipped with a safety vent. When the battery cell undergoes a thermal event, the pressure within the battery cell can exceed a threshold value. In such instances, the safety vent is configured to relieve the internal pressure of the battery cell by venting materials, such as gases, liquid, and solids into the air surrounding the battery cells. However, the materials that are vented are typically flammable. If these materials are ignited, the resulting fire event could heat up the neighboring battery cells causing a cascading thermal event to occur. Further, the accumulation of the exhausted materials within the area surrounding the battery cells may achieve a concentration which may create a potential risk of explosion.

US 2013/059175 A1 teaches a battery with a degassing system. The battery comprises a plurality of battery cells within a cell module and a base plate positioned adjacent to an end of the cell module. The base plate has a collecting trough formed therein, and a degassing opening of each cell is connected to the trough via an aperture extending through the base plate.

US 2012/003511 A1 teaches a method of mitigating battery cell failure comprising coupling a battery pack and an internal combustion engine exhaust system such that battery cell exhaust can pass from the battery cell to the engine exhaust system.

Both of KR 2021 0097523A and KR 2021 0017535A relate to a battery pack that reduces the risk of secondary ignition or explosion.

US 2019/351268 teaches a battery pack including a fire extinguishing system. The battery pack has a housing and an agent storage unit that stores fire extinguishing agent and injects this into the housing when an abnormal temperature is detected at the battery module.

According to a first aspect of the invention, a battery energy storage system is provided, comprising a battery mounting area, a venting area fluidly isolated from the battery mounting area, and a battery cell arranged at least partially within the battery mounting area. The battery cell includes at least one safety vent that is fluidly coupled to the venting area. The battery energy storage system is characterized in that the at least one safety vent is directly coupled to the venting area and a portion of the battery cell including the at least one safety vent is arranged within the venting area. The at least one safety vent may be one or more safety vents.

The venting area may be located directly adjacent to the battery mounting area.

The venting area may be located remotely from the battery mounting area.

The battery cell may comprise a battery can having a first open end, a second closed end, and a sidewall extending between the first open end and the second closed end; and a cap affixed to the battery can adjacent to the first open end.

The at least one safety vent may be formed in the sidewall. The at least one safety vent may also be considered as one of the one or more safety vents.

The at least one safety vent may be formed in the cap. The at least one safety vent may also be considered as one of the one or more safety vents.

The system may comprise a movement mechanism operable to move exhaust materials output from the at least one safety vent to the venting area. The at least one safety vent may also be considered as one of the one or more safety vents.

The system may comprise an inerting system in fluid communication with the venting area, the inerting system including: at least one spray nozzle (e.g., one or more spray nozzles), a source of inerting agent, and a delivery piping system fluidly connecting the source of inerting agent and the at least one spray nozzle. The at least one spray nozzle may also be considered as one of the one or more spray nozzles.

The system may comprise a suppression system in fluid communication with the venting area, the suppression system including at least one spray nozzle (e.g., one or more spray nozzles), a source of suppression agent, and a delivery piping system fluidly connecting the source of suppression agent and the at least one spray nozzle. The at least one spray nozzle may also be considered as one or another of the one or more spray nozzles.

According to another aspect of the invention, a method of managing a battery energy storage system according to the first aspect includes operating the battery cell and venting an exhaust material from the battery cell in response to a thermal event. Venting the exhaust material from the battery cell comprises venting the exhaust material directly to the venting area.

The method may comprise inerting the exhaust material within the venting area via an inerting system.

The method may comprise suppressing a fire within the venting area via a suppression system.

Venting the exhaust material to the venting area fluidly isolated from the battery mounting area may comprise drawing the exhaust material into the venting area via a movement mechanism.

Venting of the exhaust material may occur in response to an increase in a pressure within the battery cell in response to the thermal event.

Venting of the exhaust material may occur when the pressure within the battery cell exceeds a predetermined threshold.

Optional embodiments of the present invention will now be described by way of example only and with reference to the accompanying drawings. The following descriptions should not be considered limiting in any way. With reference to the accompanying drawings, like elements are numbered alike:
FIG. 1 is a schematic diagram of an exemplary battery cell;
FIG. 2 is a schematic diagram of an exemplary battery energy storage system;
FIG. 3 is a schematic diagram of an exemplary battery energy storage system; and
FIG. 4 is a schematic diagram of an exemplary battery energy storage system and an inerting and/or suppression system associated with the battery energy storage system.

A detailed description of one or more embodiments of the disclosed apparatus and method are presented herein by way of exemplification and not limitation with reference to the Figures.

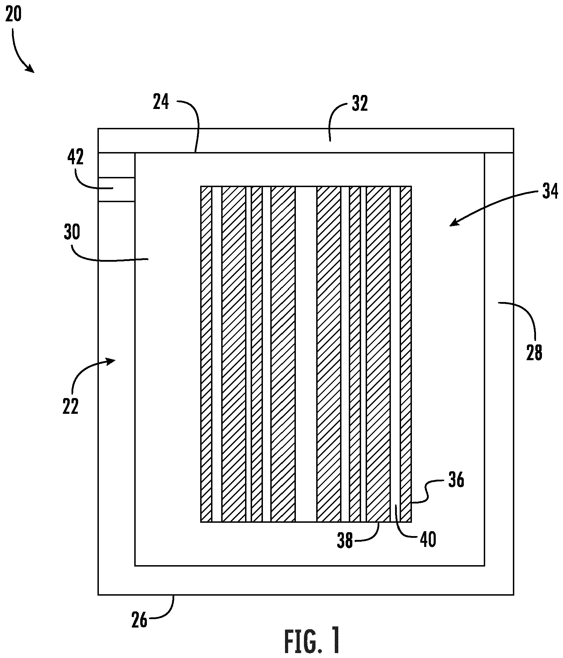

With reference now to FIG. 1, an exemplary battery 20, such as a lithium ion battery for example, is illustrated. As shown, the battery 20, also referred to herein as a cell or battery cell, includes a battery housing or can 22. The battery can 22 may have a first open end 24, a second sealed end 26, and at least one sidewall 28 extending between the first end 24 and the second end 26 to define a hollow interior 30 therein. Further, the battery can 22 may be formed from any suitable material, including but not limited to a metal material. Although the battery can 22 illustrated in the FIGS. is generally rectangular in shape, it should be understood that examples where the battery can 22 has another configuration, such as where the battery can 22 is cylindrical in shape for example, are also within the scope of the disclosure. A cap or lid 32 is connected to the first open end 24 of the battery can 22 to seal the hollow interior 30. The cap 32 may be a generally flat panel and has a size and shape corresponding to the size and shape of the battery can 22. The cap 32 may, but need not be formed from the same material as the battery can 22.

A battery unit, illustrated schematically at 34, is arranged within the hollow interior 30 of the battery can 22. The battery unit 34 includes an electrode assembly having a positive electrode 36 and a negative electrode 38. The positive and negative electrodes 36, 38 may be sheets stacked on top of one another and separated from one another by a separator 40 to form the battery unit 34. Furthermore, the stacked positive electrode 36, separator 40, and negative electrode 38, may be wound into a coil prior to installation within the hollow interior 30 of the battery can 22.

At least one safety vent 42 may be located at a surface of the battery can 22. Although the safety vent 42 in FIG. 1 is illustrated as being positioned near the first end 24 of the battery can 22, examples including a safety vent 42 arranged at another location of the battery can 22, such as at the sidewall 28 thereof for example, and/or examples where a safety vent 42 is formed in the cap 32 are also within the scope of the disclosure. During normal operation of the battery cell 20, the safety vent 42 is closed such that the interior 30 of the battery can 22 remains hermetically sealed. However, when necessary, such as when a pressure within the interior 30 of the battery can 22 reaches a predetermined threshold due to an abnormality of the battery cell 20 for example, the safety vent 42 is automatically activated. Activation of the safety vent 42 may include opening the safety vent 42 to exhaust material, such as one or more of gases, liquids, and solids, from the interior 30 of the battery can 22, thereby reducing the pressure within the battery can 22. The battery cell 20 illustrated and described herein is intended as an example only and it should be understood that a lithium ion battery cell 20 having another configuration is also contemplated herein.

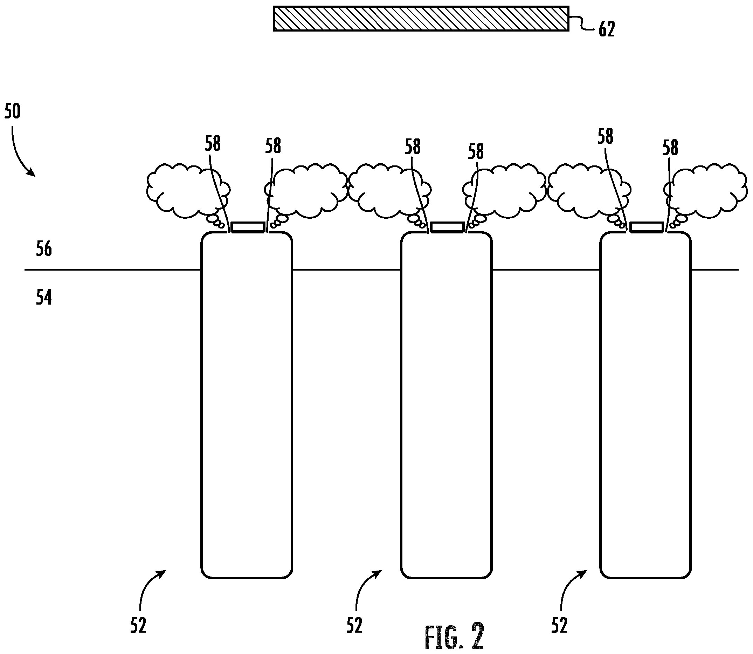

With reference now to FIGS. 2-4, an exemplary battery energy storage system (BESS) 50 including one or more battery cells 52 is illustrated. In the illustrated, non-limiting example, the BESS 50 includes a plurality of substantially identical battery cells 52, such as similar to battery cell 20, for example. However, examples where a configuration of one or more of the battery cells 52 varies relative to another of the battery cells 52 is within the scope of the disclosure. In addition, although the BESS 50 shown in the FIGS. includes a plurality of battery cells 52, it should be understood that a BESS 50 having a single battery cell is also within the scope of the disclosure.

As shown, the BESS includes a first space or area 54, also referred to herein as a battery mounting area, and at least a portion of one or more of the battery cells 52 is mounted within battery mounting area 54. In the illustrated, non-limiting example, a majority or substantially the entirety of each of the plurality of battery cells 52 is arranged within the battery mounting area 54. In an example, the BESS 50 includes a second space or area 56, also referred to herein as a venting area, that is fluidly isolated from the battery mounting area 54. The venting area 56 may be located directly adjacent to the battery mounting area 54 as shown in the FIGS., or alternatively, may be located remotely from the battery mounting area 54.

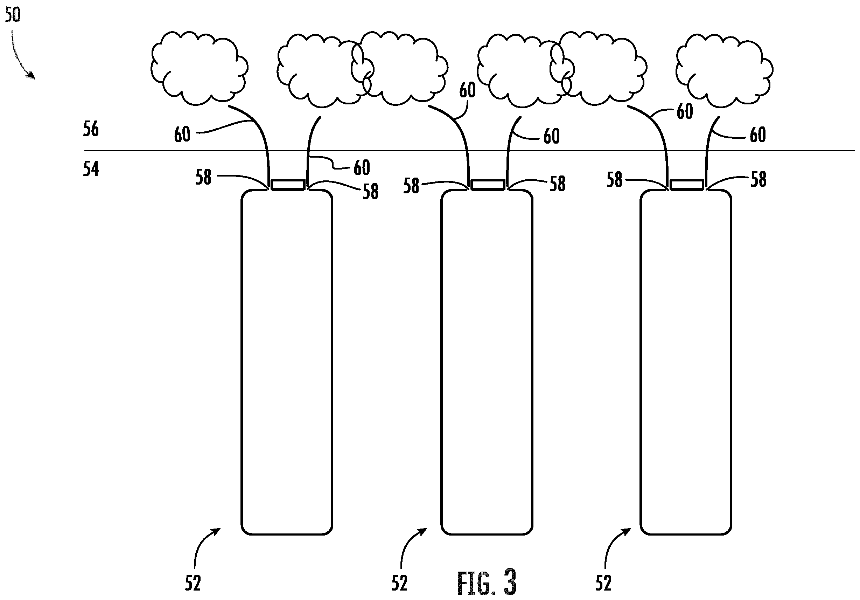

The battery cell 52 is positioned such that at least one safety vent(s) 58 of at least one battery cell 52 is arranged in fluid communication with the venting area 56. In the illustrated, non-limiting example of FIG. 2, each battery cell 52 includes two safety vents 58 and both safety vents 58 of each battery cell 52 are arranged within the venting area 56. In such examples, the exhaust materials that are released from the battery cell 52 via the safety vents 58 are released directly into the venting area 56 from the interior of the battery cell 52. In another example, best shown in FIG. 3, a safety vent 58 of one or more of the battery cells 52 is indirectly fluidly coupled to the venting area 56 by a pipe or other conduit 60. By positioning the safety vent 58 in fluid communication with the venting area 56, the exhaust materials are configured to flow into the venting area 56 as a result of the pressure within the battery cell 52. However, examples where one or more movement mechanisms 62, such as a fan for example, is configured to further facilitate the flow of the exhaust materials towards the venting area 56 are also within the scope of the disclosure. In such examples the movement mechanism 62 may be arranged within the vent area 56, as shown in FIG. 2.

By directing the exhaust gases and other materials from the battery cells 52 into the venting area 56, the flammable and/or explosive exhaust gases and other materials are substantially isolated from the battery cells 52 of the BESS 50. As a result, the thermal runaway of a battery cell 52 would not have a cascading effect on the adjacent battery cells 52, and the potential occurrence of a fire event within the battery mounting area 54 is significantly reduced.

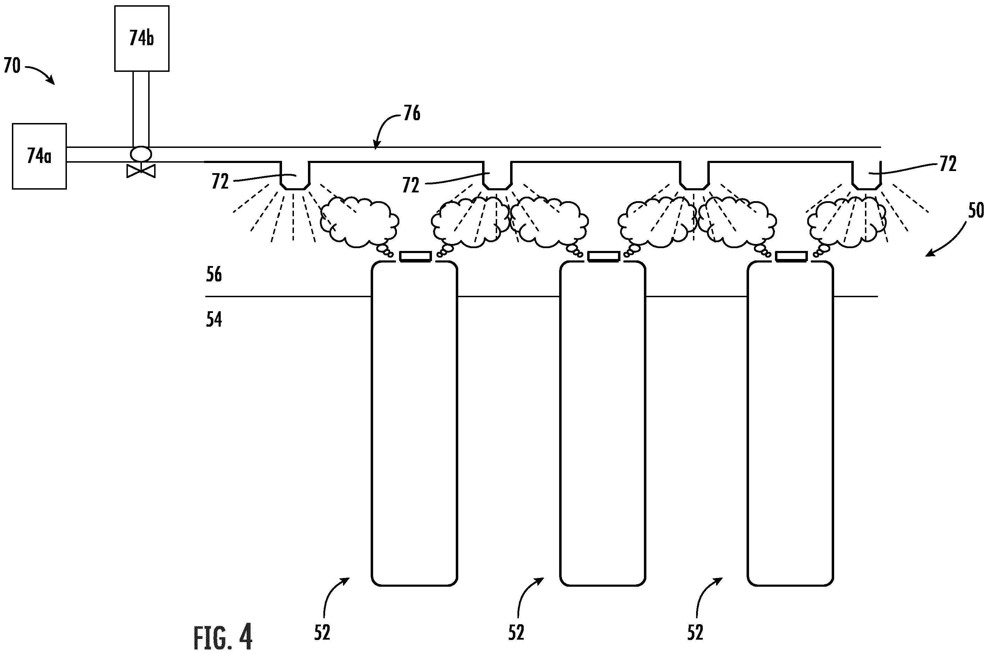

With reference now to FIG. 4, in an example, an inerting and/or suppression system 70 is arranged in fluid communication with the venting area 56. As shown, the inerting or suppression system 70 includes at least one spray nozzle 72 associated with the venting area 56 and a source of a suppression agent 74a and/or a source of inerting agent 74b. In an example, the sources of suppression agent and inerting agent 74a, 74b are in the form of self-contained pressure vessels. Examples of suitable suppression agents or inerting agents include, but are not limited to water, clean agent, inert gas or other approved media. The source of suppression agent 74a and/or the source of inerting agent 74b is arranged in fluid communication with the nozzles 72 via a delivery path defined by a delivery piping system 76. Upon detection of the presence of exhaust materials within the venting area 56, inerting agent from the source thereof 74b, is allowed to flow through the delivery piping system 76 to the one or more spray nozzles 72 for release directly into the venting area 56. Accordingly, the system 70 may be configured to inert the exhaust materials as they are evacuated from the BESS into the venting area 56. Upon detection of smoke, fire, or an explosion within the venting area 56, the suppression agent from the source of suppression agent 74a is allowed to flow through the delivery piping system 76 to the one or more spray nozzles 72 for release directly into the venting area 56. Such operation of the system 70 prevents, or at least mitigates, flames present in the venting area from spreading back into the battery cell 52 or into the BESS 50.

Although a single system 70 is illustrated and described herein as being operable to perform both inerting and fire suppression, it should be understood that examples where the system 70 is configured to perform only one of inerting and fire suppression are also contemplated herein. In such examples, a secondary system having a similar or different configuration may be arranged in fluid communication with the venting area 56 to perform the other of the inerting and fire suppression.

The term "about" is intended to include the degree of error associated with measurement of the particular quantity based upon the equipment available at the time of filing the application.

The terminology used herein is for the purpose of describing particular examples only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A battery energy storage system (50) comprising:
a battery mounting area (54);
a venting area (56) fluidly isolated from the battery mounting area (54); and
a battery cell (20; 52) arranged at least partially within the battery mounting area (54), the battery cell (20; 52) including at least one safety vent (42; 58), the at least one safety vent (42; 58) being fluidly coupled to the venting area (56);
**characterized in that** the at least one safety vent (42; 58) is directly coupled to the venting area (56) and a portion of the battery cell (20; 52) including the at least one safety vent (42; 58) is arranged within the venting area (56).

2. The system (50) of claim 1, wherein the venting area (56) is located directly adjacent to the battery mounting area (54).

3. The system (50) of claim 1, wherein the venting area (56) is located remotely from the battery mounting area (54).

4. The system (50) of claim 1, 2 or 3, wherein the battery cell (20; 52) comprises:
a battery can (22) having a first open end (24), a second closed end (26), and a sidewall (28) extending between the first open end (24) and the second closed end; and
a cap (32) affixed to the battery can (22) adjacent to the first open end (24).

5. The system (50) of claim 4, wherein:
the at least one safety vent (42; 58) is formed in the sidewall (28).

6. The system (50) of any preceding claim, wherein:
the at least one safety vent (42; 58) is formed in the cap (32).

7. The system (50) of any preceding claim, comprising a movement mechanism (62) operable to move exhaust materials output from the at least one safety vent (42; 58) to the venting area (56).

8. The system (50) of any preceding claim, comprising an inerting system (70) in fluid communication with the venting area (56), the inerting system (70) including:
at least one spray nozzle (72);
a source of inerting agent (74b); and
a delivery piping system (76) fluidly connecting the source of inerting agent (74b) and the at least one spray nozzle (72).

9. The system (50) of any preceding claim, comprising a suppression system (70) in fluid communication with the venting area (56), the suppression system (70) including:
at least one spray nozzle (72);
a source of suppression agent (74a); and
a delivery piping system (76) fluidly connecting the source of suppression agent (74a) and the at least one spray nozzle (72).

10. A method of managing a battery energy storage system (50) as claimed in claim 1, comprising:
operating the battery cell (20; 52); and
venting an exhaust material from the battery cell (20; 52) in response to a thermal event, wherein the venting the exhaust material from the battery cell (20; 52) comprises venting the exhaust material directly to the venting area (56).

11. The method of claim 10, comprising:
inerting the exhaust material within the venting area (56) via an inerting system (70).

12. The method of claim 10 or 11, comprising:
suppressing a fire within the venting area (56) via a suppression system (70).

13. The method of any of claims 10 to 12, wherein venting the exhaust material to the venting area (56) fluidly isolated from the battery mounting area (54) comprises drawing the exhaust material into the venting area (56) via a movement mechanism (62).

14. The method of any of claims 10 to 13, wherein the venting of the exhaust material occurs in response to an increase in a pressure within the battery cell (20; 52) in response to the thermal event.

15. The method of claim 14, wherein venting of the exhaust material occurs when the pressure within the battery cell (20; 52) exceeds a predetermined threshold.

## Patentansprüche

1. Batteriespeichersystem (50), umfassend:
einen Batteriemontagebereich (54);
einen Entlüftungsbereich (56), der von dem Batteriemontagebereich (54) fluidisch isoliert ist; und
eine Batteriezelle (20; 52), die mindestens teilweise innerhalb des Batteriemontagebereichs (54) angeordnet ist, wobei die Batteriezelle (20; 52) mindestens eine Sicherheitsentlüftung (42; 58) beinhaltet, wobei die mindestens eine Sicherheitsentlüftung (42; 58) mit dem Entlüftungsbereich (56) fluidisch gekoppelt ist;
**dadurch gekennzeichnet, dass** die mindestens eine Sicherheitsentlüftung (42; 58) mit dem Entlüftungsbereich (56) direkt gekoppelt ist und ein Abschnitt der Batteriezelle (20; 52), der mindestens eine Sicherheitsentlüftung (42; 58) beinhaltet, innerhalb des Entlüftungsbereichs (56) angeordnet ist.

2. System (50) nach Anspruch 1, wobei sich der Entlüftungsbereich (56) direkt benachbart zu dem Batteriemontagebereich (54) befindet.

3. System (50) nach Anspruch 1, wobei sich der Entlüftungsbereich (56) entfernt von dem Batteriemontagebereich (54) befindet.

4. System (50) nach Anspruch 1, 2 oder 3, wobei die Batteriezelle (20; 52) Folgendes umfasst:
einen Batteriebehälter (22) mit einem ersten offenen Ende (24), einem zweiten geschlossenen Ende (26) und einer Seitenwand (28), die sich zwischen dem ersten offenen Ende (24) und dem zweiten geschlossenen Ende erstreckt; und
eine Kappe (32), die an dem Batteriebehälter (22) benachbart zu dem ersten offenen Ende (24) befestigt ist.

5. System (50) nach Anspruch 4, wobei:
die mindestens eine Sicherheitsentlüftung (42; 58) in der Seitenwand (28) ausgebildet ist.

6. System (50) nach einem der vorhergehenden Ansprüche, wobei:
die mindestens eine Sicherheitsentlüftung (42; 58) in der Kappe (32) ausgebildet ist.

7. System (50) nach einem der vorhergehenden Ansprüche, umfassend einen Bewegungsmechanismus (62), der betreibbar ist, um Abgasmaterialien, die von der mindestens einen Sicherheitsentlüftung (42; 58) abgegeben werden, zu dem Entlüftungsbereich (56) zu bewegen.

8. System (50) nach einem der vorhergehenden Ansprüche, umfassend ein Inertisierungssystem (70), das in Fluidverbindung mit dem Entlüftungsbereich (56) steht, wobei das Inertisierungssystem (70) Folgendes beinhaltet:
mindestens eine Sprühdüse (72);
eine Quelle des Inertisierungsmittels (74b); und
ein Zuleitungssystem (76), das die Quelle des Inertisierungsmittels (74b) und die mindestens eine Sprühdüse (72) fluidisch verbindet.

9. System (50) nach einem der vorhergehenden Ansprüche, umfassend ein Unterdrückungssystem (70), das in Fluidverbindung mit dem Entlüftungsbereich (56) steht, wobei das Unterdrückungssystem (70) Folgendes beinhaltet:
mindestens eine Sprühdüse (72);
eine Quelle des Unterdrückungsmittels (74a); und
ein Zuleitungssystem (76), das die Quelle des Unterdrückungsmittels (74a) und die mindestens eine Sprühdüse (72) fluidisch verbindet.

10. Verfahren zum Verwalten eines Batteriespeichersystems (50) nach Anspruch 1, umfassend:
Betreiben der Batteriezelle (20; 52); und
Entlüften eines Abgasmaterials aus der Batteriezelle (20; 52) als Reaktion auf ein thermisches Ereignis, wobei das Entlüften des Abgasmaterials aus der Batteriezelle (20; 52) das Entlüften des Abgasmaterials direkt in den Entlüftungsbereich (56) umfasst.

11. Verfahren nach Anspruch 10, umfassend:
Inertisieren des Abgasmaterials innerhalb des Entlüftungsbereichs (56) über ein Inertisierungssystem (70).

12. Verfahren nach Anspruch 10 oder 11, umfassend:
Unterdrücken eines Brandes innerhalb des Entlüftungsbereichs (56) über ein Unterdrückungssystem (70).

13. Verfahren nach einem der Ansprüche 10 bis 12, wobei das Entlüften des Abgasmaterials in den Entlüftungsbereich (56), der von dem Batteriemontagebereich (54) fluidisch isoliert ist, das Ziehen des Abgasmaterials in den Entlüftungsbereich (56) über einen Bewegungsmechanismus (62) umfasst.

14. Verfahren nach einem der Ansprüche 10 bis 13, wobei das Entlüften des Abgasmaterials als Reaktion auf einen Druckanstieg innerhalb der Batteriezelle (20; 52) als Reaktion auf das thermische Ereignis erfolgt.

15. Verfahren nach Anspruch 14, wobei das Entlüften des Abgasmaterials erfolgt, wenn der Druck innerhalb der Batteriezelle (20; 52) einen vorbestimmten Schwellenwert überschreitet.

## Revendications

1. Système (50) de stockage d'énergie par batterie, le système comprenant :
une zone (54) de montage de batterie ;
une zone de ventilation (56) isolée fluidiquement de la zone (54) de montage de batterie ; et
un élément de batterie (20; 52) agencé, au moins partiellement, à l'intérieur de la zone (54) de montage de batterie, l'élément de batterie (20; 52) comportant au moins un évent de sécurité (42; 58), le ou les évents de sécurité (42; 58) étant accouplés fluidiquement à la zone de ventilation (56) ;
**caractérisé en ce que** le ou les évents de sécurité (42; 58) sont accouplés directement à la zone de ventilation (56), et une partie de l'élément de batterie (20; 52), comportant le ou les évents de sécurité (42; 58), est agencée à l'intérieur de la zone de ventilation (56).

2. Le système (50) de la revendication 1, dans lequel la zone de ventilation (56) est située directement adjacente à la zone (54) de montage de batterie.

3. Le système (50) de la revendication 1, dans lequel la zone de ventilation (56) est située à distance de la zone (54) de montage de batterie.

4. Le système (50) des revendications 1, 2 ou 3, dans lequel l'élément de batterie (20; 52) comprend :
un bac (22) de batterie, comportant une première extrémité ouverte (24), une seconde extrémité fermée (26) et une paroi latérale (28) s'étendant entre la première extrémité ouverte (24) et la seconde extrémité fermée ; et
un capuchon (32) fixé au bac (22) de batterie adjacent à la première extrémité ouverte (24).

5. Le système (50) de la revendication 4, dans lequel :
le ou les évents de sécurité (42; 58) sont formés dans la paroi latérale (28).

6. Le système (50) d'une revendication précédente quelconque, dans lequel :
le ou les évents de sécurité (42; 58) sont formés dans le capuchon (32).

7. Le système (50) d'une revendication précédente quelconque, comprenant un mécanisme de déplacement (62) servant à déplacer des matières d'échappement émises à partir du ou des évents de sécurité (42; 58) vers la zone de ventilation (56).

8. Le système (50) d'une revendication précédente quelconque, comprenant un système d'inertage (70) en communication fluidique avec la zone de ventilation (56), le système d'inertage (70) comportant :
au moins une buse de pulvérisation (72) ;
une source d'agent d'inertage (74b) ; et
un système (76) de tuyaux de distribution destiné à relier fluidiquement la source d'agent d'inertage (74b) et la ou les buses de pulvérisation (72).

9. Le système (50) d'une revendication précédente quelconque, comprenant un système de suppression (70) en communication fluidique avec la zone de ventilation (56), le système de suppression (70) comportant :
au moins une buse de pulvérisation (72) ;
une source d'agent de suppression (74a) ; et
un système (76) de tuyaux de distribution destiné à relier fluidiquement la source d'agent de suppression (74a) et la ou les buses de pulvérisation (72).

10. Procédé de gestion d'un système (50) de stockage d'énergie par batterie tel que revendiqué dans la revendication 1, le procédé comprenant :
la mise en fonctionnement de l'élément de batterie (20; 52) ; et
la ventilation d'une matière d'échappement en provenance de l'élément de batterie (20; 52) en réponse à un événement thermique, la ventilation de la matière d'échappement en provenance de l'élément de batterie (20; 52) comprenant la ventilation de la matière d'échappement directement vers la zone de ventilation (56).

11. Le procédé de la revendication 10, comprenant :
l'inertage de la matière d'échappement à l'intérieur de la zone de ventilation (56) par l'intermédiaire d'un système d'inertage (70).

12. Le procédé des revendications 10 ou 11, comprenant :
la suppression d'un feu à l'intérieur de la zone de ventilation (56) par l'intermédiaire d'un système de suppression (70).

13. Le procédé de l'une quelconque des revendications 10 à 12, dans lequel la ventilation de la matière d'échappement, vers la zone de ventilation (56) isolée fluidiquement de la zone (54) de montage de batterie, comprend l'aspiration de la matière d'échappement vers la zone de ventilation (56) par l'intermédiaire d'un mécanisme de déplacement (62).

14. Le procédé de l'une quelconque des revendications 10 à 13, dans lequel la ventilation de la matière d'échappement survient en réponse à une augmentation d'une pression à l'intérieur de l'élément de batterie (20; 52) en réponse à l'événement thermique.

15. Le procédé de la revendication 14, dans lequel la ventilation de la matière d'échappement survient lorsque la pression à l'intérieur de l'élément de batterie (20; 52) dépasse un seuil prédéfini.
